# EUROPEAN PATENT APPLICATION

(11) **EP 4 586 696 A1**
(43) Date of publication of application: **16.07.2025**
(21) Application number: 23879069.5
(22) Date of filing: 16.10.2023
(51) Int. Cl.: H04W 48/16

(54) **MULTI-PATH CONFIGURATION METHOD, APPARATUS AND SYSTEM**

(30) Priority: 17.10.2022 CN 202211284860
(71) Applicant: Huawei Technologies Co., Ltd., Shenzhen, Guangdong 518129 (CN)
(72) Inventor: YE, Kuan, Shenzhen, Guangdong 518129 (CN); PENG, Wenjie, Shenzhen, Guangdong 518129 (CN); WANG, Rui, Shenzhen, Guangdong 518129 (CN)
(74) Representative: Pfenning, Meinig & Partner mbB
(86) International application number: PCT/CN2023/124764
(87) International publication number: WO 2024/083080

(57) **Abstract**

Embodiments of this application provide a multi-path configuration method, an apparatus, and a system, to provide a procedure in which remote UE establishes a plurality of paths by using a single path. The method includes: A first terminal device receives a first message from a network device through a first path, where the first message indicates the first terminal device to establish a second path between the first terminal device and the network device, and the second path is different from the first path; the first terminal device establishes the second path in a second cell by using the first message; and the first terminal device maintains one media access control MAC entity, where the MAC entity is used by the first terminal device to communicate with the network device through a direct path in the first path or the second path.

## Description

This application claims priority to Chinese Patent Application No. 202211284860.3, filed with the China National Intellectual Property Administration on October 17, 2022 and entitled "MULTI-PATH CONFIGURATION METHOD, APPARATUS, AND SYSTEM", which is incorporated herein by reference in its entirety.

### TECHNICAL FIELD

This application relates to the field of communication technologies, and in particular, to a multi-path configuration method, an apparatus, and a system.

### BACKGROUND

In a carrier aggregation (carrier aggregation, CA) technology, a plurality of component carriers (component carrier, CC) may be aggregated for use by user equipment (user equipment, UE), to increase communication bandwidth. There is only one radio resource control (radio resource control, RRC) connection between the UE and a base station, but the base station may configure one primary cell (primary cell, PCell) and one or more secondary cells (secondary cell, SCell) for the UE.

When a path between remote (remote) UE and the base station is newly added, for example, when the remote UE has established an indirect (indirect) path with the base station via relay (relay) UE, and a direct (direct) path between the remote UE and the base station needs to be configured, if a manner of configuring a PCell in an existing CA configuration procedure is used, although an RRC message sent by the base station to the relay UE carries a synchronization reconfiguration parameter, the synchronization reconfiguration parameter can be used by the remote UE only to perform cell handover. To be specific, the synchronization reconfiguration parameter can be used by the remote UE only to perform handover from a first cell accessed through the indirect path to a second cell to be accessed through the direct path, but cannot be used by the remote UE to access both the first cell and the second cell. In other words, the remote UE cannot maintain both the indirect path and the direct path between the remote UE and the base station.

### SUMMARY

Embodiments of this application provide a multi-path configuration method, an apparatus, and a system, to provide a procedure in which remote UE establishes a plurality of paths by using a single path.

To achieve the foregoing objectives, the following technical solutions are used in embodiments of this application.

According to a first aspect, a multi-path configuration method is provided. An apparatus that performs the multi-path configuration method may be a first terminal device, or may be a module used in the first terminal device, for example, a chip or a chip system. The following uses an example in which an execution body is the first terminal device for description. A first terminal device receives a first message from a network device through a first path, where the first message indicates the first terminal device to establish a second path between the first terminal device and the network device, and the second path is different from the first path. The first terminal device establishes the second path in a second cell by using the first message. The first terminal device maintains one media access control MAC entity, and the MAC entity is used by the first terminal device to communicate with the network device through a direct path in the first path or the second path.

In this embodiment of this application, the first message can indicate the first terminal device to establish the second path between the first terminal device and the network device. Therefore, on a basis that the first path is established, the first terminal device may further establish the second path different from the first path, so that the first terminal device can communicate with the network device through the plurality of paths, namely, the first path and the second path.

With reference to the first aspect, in a possible implementation, the first message includes a second identifier of the first terminal device, and the second identifier of the first terminal device is an identifier that is of the first terminal device and that is in the second cell to be accessed by the first terminal device through the second path. Before that a first terminal device receives a first message from a network device through a first path, the method further includes: The first terminal device receives a first identifier of the first terminal device from the network device through the first path and stores the first identifier, where the first identifier of the first terminal device is an identifier that is of the first terminal device and that is in a first cell accessed by the first terminal device through the first path. After that a first terminal device receives a first message from a network device through a first path, the method further includes: The first terminal device updates the stored first identifier of the first terminal device to the second identifier of the first terminal device; or the first terminal device stores the second identifier of the first terminal device. In this solution, the first terminal device stores only the latest received second identifier of the first terminal device, so that storage resources of the first terminal device can be effectively saved. The first terminal device stores both the first identifier of the first terminal device and the second identifier of the first terminal device, so that the first identifier of the first terminal device is used when data is subsequently transmitted through the first path, and the second identifier of the first terminal device is used when data is subsequently transmitted through the second path. This makes differentiation easier.

With reference to the first aspect, in a possible implementation, the first message includes a second identifier of the first terminal device and an identifier of the second cell to be accessed by the first terminal device through the second path, and the second identifier of the first terminal device is an identifier that is of the first terminal device and that is in the second cell to be accessed by the first terminal device through the second path. Before that a first terminal device receives a first message from a network device through a first path, the method further includes: The first terminal device receives a first identifier of the first terminal device from the network device through the first path, and stores the first identifier, where the first identifier of the first terminal device is an identifier that is of the first terminal device and that is in a first cell accessed by the first terminal device through the first path. After that a first terminal device receives a first message from a network device through a first path, the method further includes: If the identifier of the second cell is the same as an identifier of the first cell, the first terminal device updates the stored first identifier of the first terminal device to the second identifier of the first terminal device; and if the identifier of the second cell is different from the identifier of the first cell, the first terminal device stores the second identifier of the first terminal device. If the first cell and the second cell are a same cell, the first terminal device stores only the latest received second identifier of the first terminal device, so that storage resources of the first terminal device can be effectively saved. If the first cell and the second cell are different cells, the first terminal device stores both the first identifier of the first terminal device and the second identifier of the first terminal device, so that the first identifier of the first terminal device is used when data is subsequently transmitted through the first path, and the second identifier of the first terminal device is used when data is subsequently transmitted through the second path. This makes differentiation easier.

With reference to the first aspect, in a possible implementation, the first path is an indirect path, and the second path is a direct path.

With reference to the first aspect, in a possible implementation, the first path is a direct path, and the second path is an indirect path. The first message includes an identifier of a second terminal device, the first message does not include a second identifier of the first terminal device, and the second identifier of the first terminal device is an identifier that is of the first terminal device and that is in the second cell to be accessed by the first terminal device through the second path. The second terminal device is a relay device between the first terminal device and the network device. That the first terminal device establishes the second path by using the first message includes: The first terminal device establishes a sidelink SL connection to the second terminal device by using the identifier of the second terminal device in the first message. Because the first message does not include the second identifier of the first terminal device, the first terminal device needs to store only one identifier of the first terminal device, namely, the first identifier of the first terminal device, to establish a plurality of paths.

With reference to the first aspect, in a possible implementation, after that the first terminal device establishes the second path, the method further includes: The first terminal device determines a primary cell accessed by the first terminal device, where the primary cell is a special cell on a target path. In this solution, the determined primary cell may be used by the first terminal device to uniquely determine the identifier that is of the first terminal device and that is in the primary cell, and perform RRC reestablishment or cell handover by using the identifier.

With reference to the first aspect, in a possible implementation, the target path is the first path, the target path is the direct path in the first path and the second path, the target path is the indirect path in the first path and the second path, or the target path is a path randomly selected by the first terminal device from the first path and the second path.

With reference to the first aspect, in a possible implementation, when the network device does not configure a split SRB for a signaling radio bearer SRB, the target path is a path on which the SRB is located.

With reference to the first aspect, in a possible implementation, when the network device configures a split SRB and a duplication SRB for an SRB, the target path is the first path, the target path is the direct path in the first path and the second path, the target path is the indirect path in the first path and the second path, or the target path is a path randomly selected by the first terminal device from the first path and the second path.

With reference to the first aspect, in a possible implementation, when the network device configures a split SRB but does not configure a duplication SRB for an SRB, the target path is a path on which a primary radio link control RLC entity is located.

With reference to the first aspect, in a possible implementation, when the target path is the first path, the primary cell is the first cell; and when the target path is the second path, the primary cell is the second cell.

With reference to the first aspect, in a possible implementation, after that the first terminal device establishes the second path, the method further includes: The first terminal device determines a primary path.

With reference to the first aspect, in a possible implementation, the primary path is the first path, the primary path is the direct path in the first path and the second path, the primary path is the indirect path in the first path and the second path, or the primary path is a path randomly selected by the first terminal device from the first path and the second path.

With reference to the first aspect, in a possible implementation, when the network device does not configure a split SRB for a signaling radio bearer SRB, the primary path is a path on which the SRB is located.

With reference to the first aspect, in a possible implementation, when the network device configures a split SRB and a duplication SRB for an SRB, the primary path is the first path, the primary path is the direct path in the first path and the second path, the primary path is the indirect path in the first path and the second path, or the primary path is a path randomly selected by the first terminal device from the first path and the second path.

With reference to the first aspect, in a possible implementation, when the network device configures a split SRB but does not configure a duplication SRB for an SRB, the primary path is the path on which the primary RLC entity is located.

According to a second aspect, a first terminal device is provided, to implement the foregoing method. The first terminal device includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the second aspect, in a possible implementation, the first terminal device includes a transceiver module and a processing module. The transceiver module is configured to receive a first message from a network device through a first path. The first message indicates the first terminal device to establish a second path between the first terminal device and the network device, and the second path is different from the first path. The transceiver module is further configured to establish the second path in a second cell by using the first message. The processing module is configured to maintain one media access control MAC entity, and the MAC entity is used by the first terminal device to communicate with the network device through a direct path in the first path or the second path.

With reference to the second aspect, in a possible implementation, the first terminal device further includes a storage module. The first message includes a second identifier of the first terminal device, and the second identifier of the first terminal device is an identifier that is of the first terminal device and that is in the second cell to be accessed by the first terminal device through the second path. The transceiver module is further configured to receive a first identifier of the first terminal device from the network device through the first path, where the first identifier of the first terminal device is an identifier that is of the first terminal device and that is in a first cell accessed by the first terminal device through the first path. The storage module is configured to store the first identifier of the first terminal device. The processing module is further configured to update, to the second identifier of the first terminal device, the first identifier that is of the first terminal device and that is stored in the storage module; or the storage module is further configured to store the second identifier of the first terminal device.

With reference to the second aspect, in a possible implementation, the first terminal device further includes a storage module. The first message includes a second identifier of the first terminal device and an identifier of the second cell to be accessed by the first terminal device through the second path, and the second identifier of the first terminal device is an identifier that is of the first terminal device and that is in the second cell to be accessed by the first terminal device through the second path. The transceiver module is further configured to receive a first identifier of the first terminal device from the network device through the first path, where the first identifier of the first terminal device is an identifier that is of the first terminal device and that is in a first cell accessed by the first terminal device through the first path. The storage module is configured to store the first identifier of the first terminal device. The processing module is further configured to: if the identifier of the second cell is the same as an identifier of the first cell, update the stored first identifier of the first terminal device to the second identifier of the first terminal device; and the storage module is further configured to: if the identifier of the second cell is different from the identifier of the first cell, store the second identifier of the first terminal device.

With reference to the second aspect, in a possible implementation, the first path is an indirect path, and the second path is a direct path.

With reference to the second aspect, in a possible implementation, the first path is a direct path, and the second path is an indirect path. The first message includes an identifier of a second terminal device, the first message does not include a second identifier of the first terminal device, and the second identifier of the first terminal device is an identifier that is of the first terminal device and that is in the second cell to be accessed by the first terminal device through the second path. The second terminal device is a relay device between the first terminal device and the network device. That the transceiver module is further configured to establish the second path in a second cell by using the first message includes: establishing a sidelink SL connection to the second terminal device by using the identifier of the second terminal device in the first message.

With reference to the second aspect, in a possible implementation, the processing module is further configured to determine a primary cell accessed by the first terminal device, where the primary cell is a special cell on a target path.

With reference to the second aspect, in a possible implementation, the target path is the first path, the target path is the direct path in the first path and the second path, the target path is the indirect path in the first path and the second path, or the target path is a path randomly selected by the first terminal device from the first path and the second path.

With reference to the second aspect, in a possible implementation, when the network device does not configure a split SRB for a signaling radio bearer SRB, the target path is a path on which the SRB is located.

With reference to the second aspect, in a possible implementation, when the network device configures a split SRB and a duplication SRB for an SRB, the target path is the first path, the target path is the direct path in the first path and the second path, the target path is the indirect path in the first path and the second path, or the target path is a path randomly selected by the first terminal device from the first path and the second path.

With reference to the second aspect, in a possible implementation, when the network device configures a split SRB but does not configure a duplication SRB for an SRB, the target path is a path on which a primary radio link control RLC entity is located.

With reference to the second aspect, in a possible implementation, when the target path is the first path, the primary cell is the first cell; and when the target path is the second path, the primary cell is the second cell.

With reference to the second aspect, in a possible implementation, the processing module is further configured to determine a primary path.

With reference to the second aspect, in a possible implementation, the primary path is the first path, the primary path is the direct path in the first path and the second path, the primary path is the indirect path in the first path and the second path, or the primary path is a path randomly selected by the first terminal device from the first path and the second path.

With reference to the second aspect, in a possible implementation, when the network device does not configure a split SRB for a signaling radio bearer SRB, the primary path is a path on which the SRB is located.

With reference to the second aspect, in a possible implementation, when the network device configures a split SRB and a duplication SRB for an SRB, the primary path is the first path, the primary path is the direct path in the first path and the second path, the primary path is the indirect path in the first path and the second path, or the primary path is a path randomly selected by the first terminal device from the first path and the second path.

With reference to the second aspect, in a possible implementation, when the network device configures a split SRB but does not configure a duplication SRB for an SRB, the primary path is the path on which the primary RLC entity is located.

According to a third aspect, a communication apparatus is provided, including a processor. The processor is configured to: couple to a memory, and after reading computer instructions stored in the memory, perform the method in the first aspect according to the instructions.

With reference to the third aspect, in a possible implementation, the communication apparatus further includes the memory. The memory is configured to store the computer instructions.

With reference to the third aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the third aspect, in a possible implementation, the communication apparatus may be a chip or a chip system. When the communication apparatus is a chip system, the communication apparatus may include a chip, or may include a chip and another discrete device.

With reference to the third aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fourth aspect, a communication system is provided, including a network device, a second terminal device, and a first terminal device configured to perform the method in the first aspect. The second terminal device is a relay device between the first terminal device and the network device.

According to a fifth aspect, a computer-readable storage medium is provided. The computer-readable storage medium stores instructions. When the instructions are run on a computer, the computer is enabled to perform the method in the first aspect.

For technical effect brought by the second aspect to the fifth aspect, refer to the technical effect brought by different implementations of the first aspect. Details are not described herein again.

### BRIEF DESCRIPTION OF DRAWINGS

FIG. 1 is a diagram of SL communication in a conventional technology;
FIG. 2 is a diagram of a communication scenario of multi-path relay in a conventional technology;
FIG. 3A is a diagram of an architecture of protocol stacks used when remote UE and relay UE communicate with each other through an SL in a conventional technology;
FIG. 3B is a diagram of an architecture of protocol stacks used when remote UE and relay UE communicate with each other through an ideal non-3GPP link in a conventional technology;
FIG. 4 is a diagram of configuring carrier aggregation for UE by a base station in a conventional technology;
FIG. 5A is a diagram of an architecture of a communication system according to an embodiment of this application;
FIG. 5B is a diagram of an architecture of another communication system according to an embodiment of this application;
FIG. 6 is a diagram 1 of an architecture of a communication apparatus according to an embodiment of this application;
FIG. 7 is a flowchart of a multi-path configuration method according to an embodiment of this application;
FIG. 8 is a flowchart of a specific example of a multi-path configuration method according to an embodiment of this application;
FIG. 9 is a flowchart of another specific example of a multi-path configuration method according to an embodiment of this application;
FIG. 10 is a flowchart of another specific example of a multi-path configuration method according to an embodiment of this application; and
FIG. 11 is a diagram 2 of an architecture of a communication apparatus according to an embodiment of this application.

### DESCRIPTION OF EMBODIMENTS

For ease of understanding the technical solutions in embodiments of this application, the following first briefly describes technologies or terms related to this application.

### 1. Sidelink (sidelink, SL) and SL communication

In a wireless communication system, data transmission may be performed between UEs via a base station, or data transmission may be directly performed between UEs without a base station. Similar to a Uu interface between the UE and the base station, an interface between the UEs may be referred to as a PC5 interface.

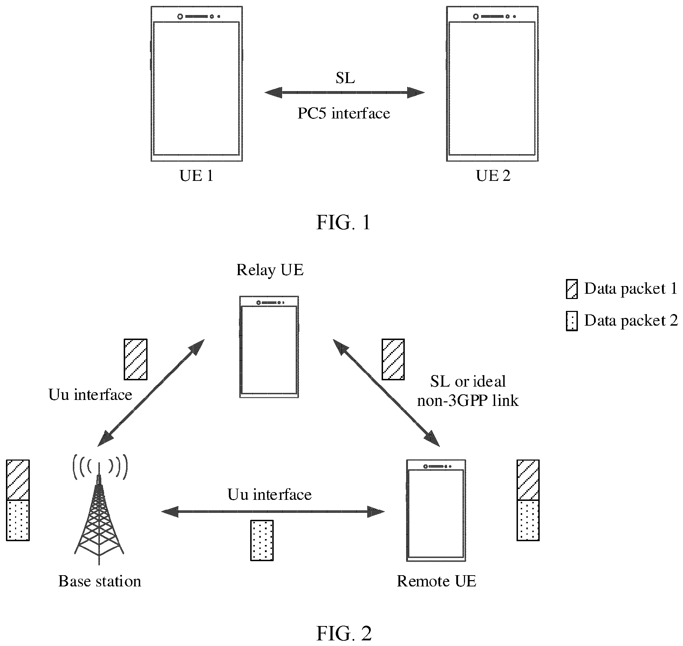

Generally, a link between the UEs may be referred to as an SL. As shown in FIG. 1, data transmission may be performed between UE 1 and UE 2 via a PC5 interface through the SL. A typical application scenario of the SL communication may be vehicle to everything (vehicle to everything, V2X). In the internet of vehicles, each vehicle may be considered as one UE, and transmission may be performed between UEs through the SL without the base station. In this way, a communication delay can be effectively reduced.

The SL supports broadcast, unicast, and multicast communication.

In the broadcast communication, similar to broadcasting system information by the base station, the UE 1 may send unencrypted data of a broadcast service to another UE. If any UE within an effective receiving range, for example, the UE 2, is interested in the broadcast service, the UE may receive the data of the broadcast service.

In the unicast communication, similar to a case in which an RRC connection is first established between the UE and the base station and then data communication is performed, a unicast connection is first established between the UE 1 and the UE 2, and then data transmission is performed based on a negotiated identifier. Data transmitted in the unicast communication may be encrypted or may be unencrypted. Different from the broadcast communication, in the unicast communication, the UE 1 and the UE 2 can communicate with each other only after the unicast connection is established.

The multicast communication may be communication between all UEs in a communication group, and any UE in the communication group may send or receive data of a multicast service.

Embodiments of this application mainly relate to the unicast communication. One time of unicast communication of the SL corresponds to a pair including a source (source) layer-2 identifier (layer-2 identifier, L2 ID) and a destination (destination) L2 ID. The source L2 ID and the destination L2 ID are included in each subheader of an SL media access control (media access control, MAC) layer data protocol unit (protocol data unit, PDU), so that data can be transmitted from a transmit end to a correct receive end.

### 2. Radio bearer (radio bearer, RB)

A plurality of protocol entities allocated by a base station to UE and related configurations are collectively referred to as an RB. The RB is a service provided by a layer 2 for transmitting user data between the UE and the base station. The RB includes a packet data convergence protocol (packet data convergence protocol, PDCP) entity, a radio link control (radio link control, RLC) protocol entity, a MAC protocol entity, and a resource allocated to a physical (physical, PHY) layer. The RB may be specifically classified into a data radio bearer (data radio bearer, DRB) used to carry data and a signaling radio bearer (signaling radio bearer, SRB) used to carry a signaling message.

In SL communication, UEs communicate with each other through an SL RB. The SL RB includes an SL DRB and an SL SRB. In a related protocol, an RB configuration usually refers to configurations of a PDCP layer and a service data adaptation protocol (service data adaptation protocol, SDAP) layer. In addition, protocol entities at and below the RLC layer may be referred to as RLC bearers, and corresponding configurations are provided in an RLC bearer configuration.

### 3. Multi-path relay (multi-path relay) communication scenario

As evolution of a UE-to-network relay (UE-to-network relay) solution in the 3rd generation partnership project (3rd generation partnership project, 3GPP) release (release, R) 17, a multi-path relay solution is widely discussed in the 3GPP R18. FIG. 2 is a diagram of a communication scenario of multi-path relay. Remote UE may communicate with a base station through both a direct path and an indirect path. On the direct path, the remote UE and the base station may directly communicate with each other through a Uu interface. On the indirect path, the remote UE may communicate with the base station through relay UE. The relay UE and the base station may communicate with each other through the Uu interface. The remote UE and the relay UE may communicate with each other through an SL, or may communicate with each other through an ideal non-3GPP link. In the communication scenario of multi-path relay, same data or different data may be simultaneously transmitted through the direct path and the indirect path, that is, a data packet 1 and a data packet 2 may be simultaneously transmitted, and the data packet 1 and the data packet 2 may be the same or different. This can improve a throughput rate and reliability of data transmission.

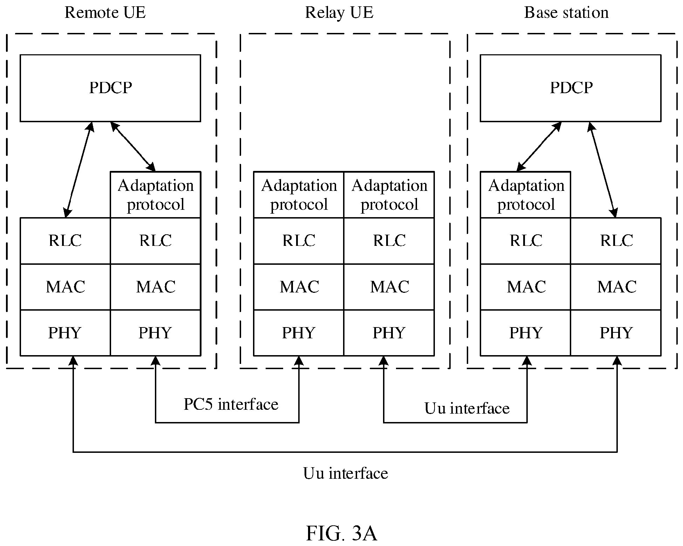

FIG. 3A is a diagram of an architecture of protocol stacks used when remote UE and relay UE communicate with each other through an SL. In the remote UE, there are two protocol stacks in addition to a PDCP. One protocol stack is used for communication with a base station through a Uu interface, and includes an RLC layer, a MAC layer, and a PHY layer. The other protocol stack is used for communication with the relay UE through a PC5 interface, and includes an adaptation protocol layer, an RLC layer, a MAC layer, and a PHY layer. In the relay UE, there are two protocol stacks, which are respectively used for communication with the remote UE through the PC5 interface and communication with the base station through the Uu interface. The two protocol stacks each include an adaptation protocol layer, an RLC layer, a MAC layer, and a PHY layer. In the base station, there are two protocol stacks in addition to the PDCP. One protocol stack is used for communication with the remote UE through the Uu interface, and includes an RLC layer, a MAC layer, and a PHY layer. The other protocol stack is used for communication with the relay UE through the Uu interface, and includes an adaptation protocol layer, an RLC layer, a MAC layer, and a PHY layer. Generally, an adaptation protocol used when the remote UE communicates with the relay UE through the PC5 interface may be an SRAP.

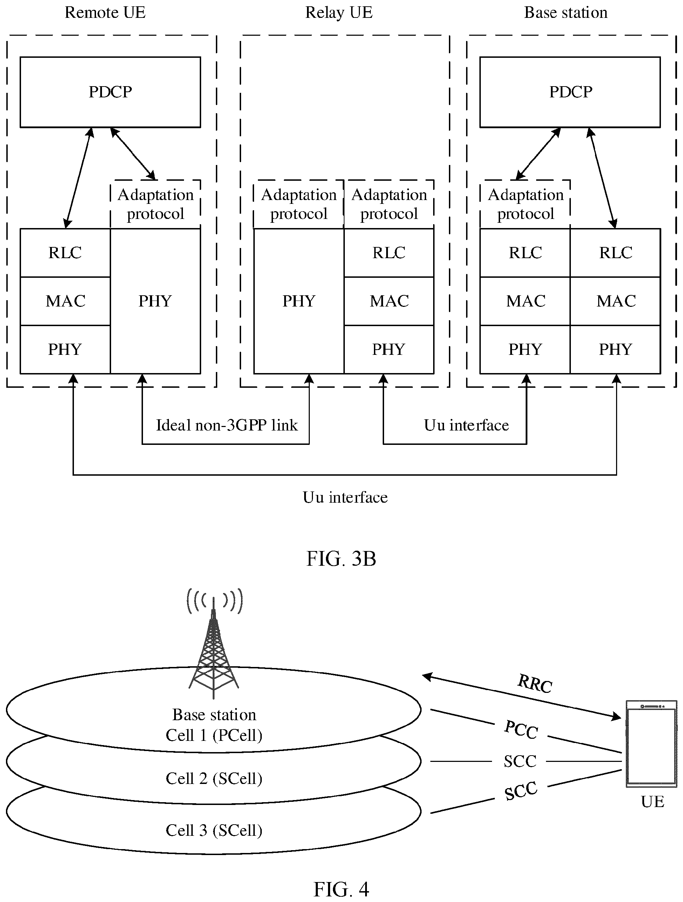

FIG. 3B is a diagram of an architecture of protocol stacks used when remote UE and relay UE communicate with each other through an ideal non-3GPP link. A difference from FIG. 3A lies in that, on a side of the remote UE, a protocol stack used for communication with relay UE through the ideal non-3GPP link includes an adaptation protocol layer and a PHY layer. On a side of the relay UE, a protocol stack used for communication with the remote UE through the ideal non-3GPP link includes an adaptation protocol layer and a PHY layer. Optionally, the adaptation protocol layer may not be included in FIG. 3B.

### 4. Carrier aggregation

UE having a carrier aggregation capability may simultaneously transmit data on one or more CCs. As shown in FIG. 4, the CCs may be further divided into a primary component carrier (primary component carrier, PCC) between a base station and a PCell and a secondary component carrier (secondary component carrier, SCC) between the base station and an SCell. The PCell may be configured to provide non-access stratum (non-access stratum, NAS) mobility information during establishment, reestablishment, or handover of an RRC connection between the base station and the UE. The SCell may also be used to provide secure input during reestablishment or handover of the RRC connection between the base station and the UE. One PCell and one or more SCells may form a group of serving cells. In other words, a serving cell set of the UE includes one PCell and one or more SCells.

When the base station configures carrier aggregation for the UE, a multi-carrier property of a PHY layer affects only a MAC layer. In an uplink and a downlink, each cell in the serving cell set has an independent hybrid automatic repeat request (hybrid automatic repeat request, HARQ) entity. In a case of no spatial reuse, each cell in the serving cell set is allocated with a transport block or is granted to generate a transport block. Each transport block and potential HARQ retransmission of the transport block are mapped to a corresponding cell.

Reconfiguration, addition, and deletion of the SCell may be performed by the base station through the RRC connection. When the UE performs cell handover in a new radio (new radio, NR) system or the UE is restored from an RRC inactive (RRC_INACTIVE) state to an RRC connected (RRC_CONNECTED) state, the base station may add, delete, retain, or reconfigure the SCell, so that the SCell is used together with a target PCell. When a new SCell is added, dedicated RRC signaling is used to send all system information required for the SCell. In other words, when the UE is in the RRC connected (RRC_CONNECTED) state, the UE does not need to directly obtain broadcast system information from the SCell.

### 5. Existing carrier aggregation configuration procedure and existing problem thereof

In a communication scenario of multi-path relay, for example, when remote UE has established an indirect path to a base station via relay UE, and a direct path between the remote UE and the base station needs to be configured, if a manner of configuring an SCell in the existing carrier aggregation configuration procedure is used, an RRC message sent by the base station to the relay UE does not carry a synchronization reconfiguration parameter used by the remote UE to randomly access the base station. Consequently, the remote UE cannot randomly access the base station, and the direct path cannot be established.

As described in the background, if the manner of configuring the PCell in the existing CA configuration procedure is used, the remote UE cannot maintain both the indirect path and the direct path between the remote UE and the base station. In addition, the base station may allocate a first cell radio network temporary identifier (cell radio network temporary identifier, C-RNTI) to the remote UE, where the first C-RNTI is a C-RNTI that is of the remote UE and that is in a first cell accessed by the remote UE through the indirect path, and send the first C-RNTI to the remote UE through the indirect path. The synchronization reconfiguration parameter carried in the RRC message may include a second C-RNTI, and the second C-RNTI is a C-RNTI that is of the remote UE and that is in the second cell accessed by the remote UE through the direct path. After receiving the first C-RNTI and the second C-RNTI, when the remote UE triggers reestablishment, determining a C-RNTI to be reported is also a technical problem to be urgently resolved.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, unless otherwise specified, "a plurality of" means two or more than two. The expression "at least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

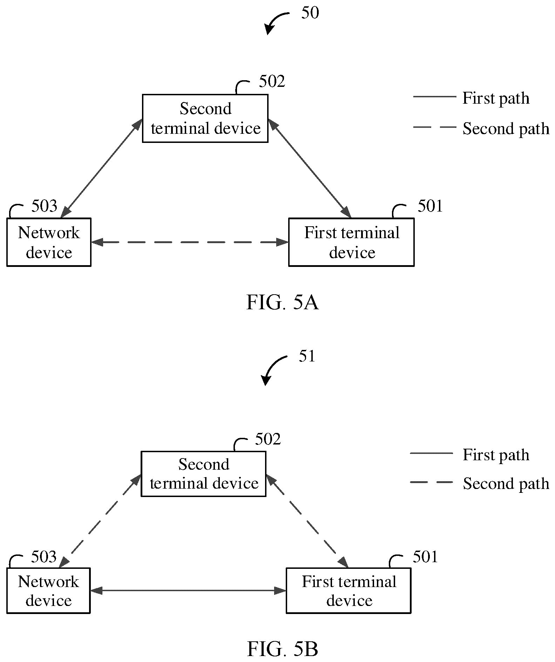

FIG. 5A shows a communication system 50 according to an embodiment of this application. The communication system 50 includes a first terminal device 501, a second terminal device 502, and a network device 503. A path for communication between the first terminal device 501 and the network device 503 by using the second terminal device 502 is a first path. A path for direct communication between the first terminal device 501 and the network device 503 is a second path. In other words, the first path is an indirect path, and the second path is a direct path.

FIG. 5B shows another communication system 51 according to an embodiment of this application. The communication system 51 includes a first terminal device 501, a second terminal device 502, and a network device 503. A path for direct communication between the first terminal device 501 and the network device 503 is a first path. A path for communication between the first terminal device 501 and the network device 503 by using the second terminal device 502 is a second path. In other words, the first path is a direct path, and the second path is an indirect path.

In embodiments of this application, an example in which one of the first path and the second path is a direct path and the other path is an indirect path is used for description. However, the first path and the second path may alternatively be two different indirect paths. This is not limited in embodiments of this application.

In FIG. 5A and FIG. 5B, the first terminal device 501 receives a first message from the network device 503 through the first path, where the first message indicates the first terminal device 501 to establish the second path between the first terminal device 501 and the network device 503, and the second path is different from the first path. The first terminal device 501 establishes the second path in a second cell by using the first message. The first terminal device 501 maintains one MAC entity, and the MAC entity is used by the first terminal device 501 to communicate with the network device 503 through the direct path in the first path or the second path. Specific implementation and technical effect of the solution are described in detail in subsequent method embodiments, and details are not described herein again.

Optionally, the network device 503 in this embodiment of this application is a device that connects the terminal device to a wireless network, and may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a wireless fidelity (wireless-fidelity, Wi-Fi) system, or the like, or may be a module or unit that completes some functions of the base station, for example, may be a central unit (central unit, CU), or may be a distributed unit (distributed unit, DU). A specific technology and a specific device form that are used by the network device are not limited in embodiments of this application. In this application, unless otherwise specified, the network device is a radio access network device.

Optionally, the first terminal device 501 or the second terminal device 502 in this embodiment of this application may be a device configured to implement a wireless communication function, for example, a terminal or a chip that may be used in the terminal. The terminal may be UE, an access terminal, a terminal unit, a terminal station, a mobile station, a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal apparatus, an augmented reality (augmented reality, AR) terminal apparatus, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The first terminal device 501 or the second terminal device 502 may be at a fixed location, or may be movable. This is not specifically limited in this embodiment of this application.

Optionally, in this embodiment of this application, the first terminal device 501 or the second terminal device 502 includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system is any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed based on the method provided in embodiments of this application by running a program that records code of the method provided in embodiments of this application. For example, the method provided in embodiments of this application may be performed by the first terminal device 501 or the second terminal device 502, or a functional module that can invoke and execute a program in the first terminal device 501 or the second terminal device 502. Alternatively, the method provided in embodiments of this application may be performed by the network device 503, or a functional module that can invoke and execute a program in the network device 503.

Optionally, related functions of the first terminal device, the second terminal device, or the network device in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

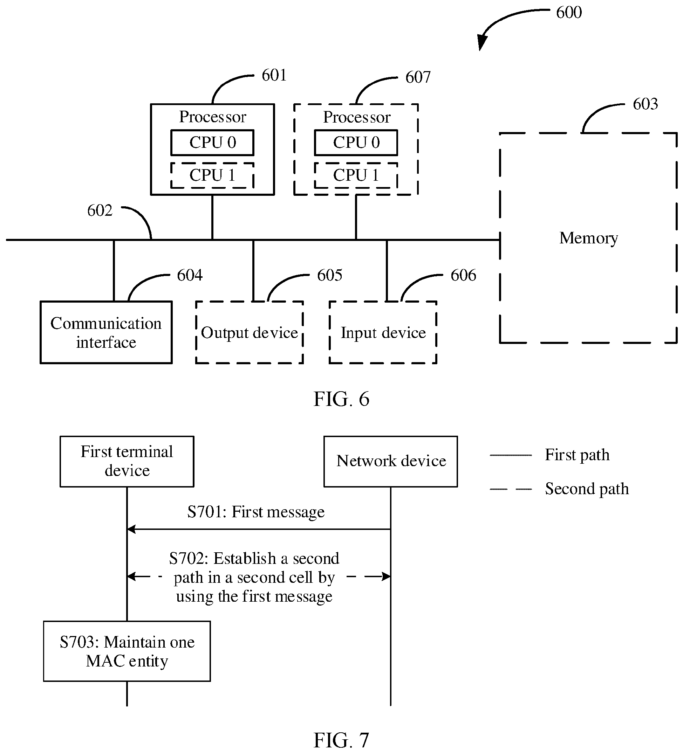

For example, related functions of the first terminal device, the second terminal device, or the network device in embodiments of this application may be implemented by using a communication apparatus 600 in FIG. 6.

FIG. 6 is a diagram of an architecture of a communication apparatus 600 according to an embodiment of this application. The communication apparatus 600 includes one or more processors 601, a communication line 602, and at least one communication interface (in FIG. 6, an example in which a communication interface 604 and one processor 601 are included is merely used for description). Optionally, the communication apparatus 600 may further include a memory 603.

The processor 601 may be a CPU, a microprocessor, an application-specific integrated circuit (application-specific integrated circuit, ASIC), or one or more integrated circuits configured to control program execution of the solutions of this application.

The communication line 602 may include a path configured to connect different components.

The communication interface 604 may be a transceiver module, configured to communicate with another device or a communication network, for example, Ethernet, a RAN, or a WLAN. For example, the transceiver module may be an apparatus like a transceiver or a transceiver machine. Optionally, the communication interface 604 may alternatively be a transceiver circuit located in the processor 601, and is configured to implement signal input and signal output of the processor.

The memory 603 may be an apparatus with a storage function. For example, the memory 603 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), or other compact disc storage or optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the communication line 602. Alternatively, the memory may be integrated with the processor.

The memory 603 is configured to store computer-executable instructions for executing the solutions of this application, and the processor 601 controls the execution. The processor 601 is configured to execute the computer-executable instructions stored in the memory 603, to implement the multi-path configuration method provided in embodiments of this application.

Alternatively, in this embodiment of this application, the processor 601 may perform a processing-related function in the multi-path configuration method provided in the following embodiment of this application, and the communication interface 604 is responsible for communication with another device or a communication network. This is not specifically limited in this embodiment of this application.

The computer-executable instructions in this embodiment of this application may also be referred to as application program code. This is not specifically limited in this embodiment of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 607 in FIG. 6. Each of the processors may be a single-CPU (single-CPU) processor, or may be a multi-CPU (multi-CPU) processor. The processor herein may be one or more devices, circuits, and/or processing cores configured to process data (for example, computer program instructions).

During specific implementation, in an embodiment, the communication apparatus 600 may further include an output device 605 and an input device 606. The output device 605 communicates with the processor 601, and may display information in a plurality of manners.

With reference to FIG. 1 to FIG. 6, the following describes in detail the multi-path configuration method provided in embodiments of this application.

FIG. 7 shows a multi-path configuration method according to an embodiment of this application. The multi-path configuration method includes the following steps.

Step S701: A first terminal device receives a first message from a network device through a first path, where the first message indicates the first terminal device to establish a second path between the first terminal device and the network device, and the second path is different from the first path.

With reference to FIG. 2, FIG. 3A, and FIG. 3B, the first terminal device may be the remote UE in FIG. 2, FIG. 3A, or FIG. 3B, a second terminal device may be the relay UE in FIG. 2, FIG. 3A, or FIG. 3B, and the network device may be the base station in FIG. 2, FIG. 3A, or FIG. 3B.

In this embodiment of this application, unless otherwise specified, the first path may be an indirect path or a direct path. When the first path is an indirect path, the second path is a direct path. When the first path is a direct path, the second path is an indirect path.

For example, the first message may be an RRC reconfiguration message.

Optionally, the first message includes a second identifier of the first terminal device, and the second identifier of the first terminal device is an identifier that is of the first terminal device and that is in a second cell to be accessed by the first terminal device through the second path. Before step S701, the multi-path configuration method provided in this embodiment of this application further includes: The first terminal device receives a first identifier of the first terminal device from the network device through the first path and stores the first identifier, where the first identifier of the first terminal device is an identifier that is of the first terminal device and that is in a first cell accessed by the first terminal device through the first path. After step S701, the multi-path configuration method provided in this embodiment of this application further includes: The first terminal device updates the stored first identifier of the first terminal device to the second identifier of the first terminal device; or the first terminal device stores the second identifier of the first terminal device. In this solution, the first terminal device stores only the latest received second identifier of the first terminal device, so that storage resources of the first terminal device can be effectively saved. The first terminal device stores both the first identifier of the first terminal device and the second identifier of the first terminal device, so that the first identifier of the first terminal device is used when data is subsequently transmitted through the first path, and the second identifier of the first terminal device is used when data is subsequently transmitted through the second path. This makes differentiation easier.

In this embodiment of this application, an identifier of the first terminal device may be uniquely determined based on a path and a cell on the path. Unified descriptions are provided herein and details are not described below again. For example, the identifier of the first terminal device may be a C-RNTI of the first terminal device. The second identifier of the first terminal device may be included in a synchronization reconfiguration parameter.

In this embodiment of this application, the identifier of the first terminal device may be a parameter name, and a value of the first identifier or the second identifier of the first terminal device, namely, a first value or a second value, may be a parameter value. That the first terminal device updates the stored first identifier of the first terminal device to the second identifier of the first terminal device may also be expressed as follows: The first terminal device changes or replaces a value of the identifier of the first terminal device from the first value to the second value; or the first terminal device replaces the first value with the second value as a value of the identifier of the first terminal device; or the first terminal device sets a value of the identifier of the first terminal device to the second value.

Optionally, the first identifier of the first terminal device may be the same as or different from the second identifier of the first terminal device.

For ease of reference and description, in this embodiment of this application, the solution in which "the first terminal device updates the stored first identifier of the first terminal device to the second identifier of the first terminal device" is referred to as a solution 1, and "the first terminal device stores the first identifier of the first terminal device and the second identifier of the first terminal device" is referred to as a solution 2.

The foregoing solution 1 may be performed in the scenario shown in FIG. 5A, or may be performed in the scenario shown in FIG. 5B. Similarly, the foregoing solution 2 may be performed in the scenario shown in FIG. 5A, or may be performed in the scenario shown in FIG. 5B. This is not limited in this embodiment of this application.

Optionally, the first message includes a second identifier of the first terminal device and an identifier of the second cell to be accessed by the first terminal device through the second path, and the second identifier of the first terminal device is an identifier that is of the first terminal device and that is in the second cell to be accessed by the first terminal device through the second path. Before step S701, the multi-path configuration method provided in this embodiment of this application further includes: The first terminal device receives a first identifier of the first terminal device from the network device through the first path and stores the first identifier, where the first identifier of the first terminal device is an identifier that is of the first terminal device and that is in a first cell accessed by the first terminal device through the first path. After step S702, the multi-path configuration method provided in this embodiment of this application further includes: If the identifier of the second cell is the same as an identifier of the first cell, the first terminal device updates the stored first identifier of the first terminal device to the second identifier of the first terminal device; and if the identifier of the second cell is different from the identifier of the first cell, the first terminal device stores the second identifier of the first terminal device. For ease of reference and description, in this embodiment of this application, the solution is referred to as a solution 3. The solution 3 may be performed in the scenario shown in FIG. 5A, or may be performed in the scenario shown in FIG. 5B.

In the solution 3, if the first cell and the second cell are a same cell, the first terminal device stores only the latest received second identifier of the first terminal device, so that storage resources of the first terminal device can be effectively saved. If the first cell and the second cell are different cells, the first terminal device stores both the first identifier of the first terminal device and the second identifier of the first terminal device, so that the first identifier of the first terminal device is used when data is subsequently transmitted through the first path, and the second identifier of the first terminal device is used when data is subsequently transmitted through the second path. This makes differentiation easier.

For example, the identifier of the first cell may be a physical cell identifier (physical cell identifier, PCI) and/or a cell global identifier (cell global identifier, CGI) of the first cell. The identifier of the second cell may be a PCI and/or a CGI of the second cell.

For example, the second identifier of the first terminal device and the identifier of the second cell may be included in a synchronization reconfiguration parameter.

Step S702: The first terminal device establishes the second path in the second cell by using the first message.

Optionally, the first path is a direct path, and the second path is an indirect path. The first message includes an identifier of the second terminal device, the first message does not include the second identifier of the first terminal device, and the second identifier of the first terminal device is the identifier that is of the first terminal device and that is in the second cell to be accessed by the first terminal device through the second path. The second terminal device is a relay device between the first terminal device and the network device. Step S702 includes: The first terminal device establishes a sidelink SL connection to the second terminal device by using the identifier of the second terminal device in the first message. For ease of reference and description, in this embodiment of this application, the solution is referred to as a solution 4. The solution 4 may be performed only in the scenario shown in FIG. 5B.

In the solution 4, because the first message does not include the second identifier of the first terminal device, the first terminal device needs to store only one identifier of the first terminal device, namely, the first identifier of the first terminal device, to establish a plurality of paths.

In the scenarios shown in FIG. 5A and FIG. 5B, a same solution may be performed. For example, the solution 1, the solution 2, or the solution 3 may be performed. In the scenarios shown in FIG. 5A and FIG. 5B, different solutions may alternatively be performed. For example, in the scenario shown in FIG. 5A, the solution 1, the solution 2, or the solution 3 is performed, and in the scenario shown in FIG. 5B, the solution 4 is performed. For another example, in the scenario shown in FIG. 5A, the solution 1 is performed, and in the scenario shown in FIG. 5B, the solution 2 is performed. Alternatively, in the scenario shown in FIG. 5A, the solution 2 is performed, and in the scenario shown in FIG. 5B, the solution 1 is performed. Alternatively, in the scenario shown in FIG. 5A, the solution 1 is performed, and in the scenario shown in FIG. 5B, the solution 3 is performed. Alternatively, in the scenario shown in FIG. 5A, the solution 3 is performed, and in the scenario shown in FIG. 5B, the solution 1 is performed. Alternatively, in the scenario shown in FIG. 5A, the solution 2 is performed, and in the scenario shown in FIG. 5B, the solution 3 is performed. Alternatively, in the scenario shown in FIG. 5A, the solution 3 is performed, and in the scenario shown in FIG. 5B, the solution 2 is performed. This is not limited in embodiments of this application.

Step S703: The first terminal device maintains one MAC entity, where the MAC entity is used by the first terminal device to communicate with the network device through the direct path in the first path or the second path.

The MAC entity in this embodiment of this application may be a Uu MAC entity.

Different from that the first terminal device needs to maintain two MAC entities in dual connectivity (dual connectivity, DC), in this embodiment of this application, the first terminal device needs to maintain only one MAC entity.

In the scenario shown in FIG. 5A, before step S703, the multi-path configuration method provided in this embodiment of this application further includes: The first terminal device creates the MAC entity.

In this embodiment of this application, the first message can indicate the first terminal device to establish the second path between the first terminal device and the network device. Therefore, on a basis that the first path is established, the first terminal device may further establish the second path different from the first path, so that the first terminal device can communicate with the network device through the plurality of paths, namely, the first path and the second path.

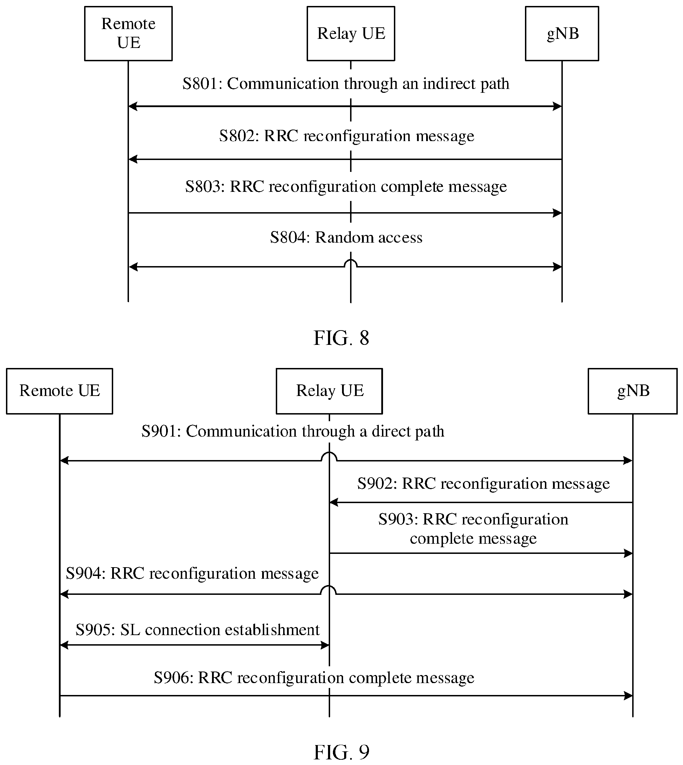

For example, with reference to FIG. 5A, the first terminal device is remote UE, the second terminal device is relay UE, the network device is a gNB, the first message is an RRC reconfiguration message, the first identifier of the first terminal device is a first C-RNTI, and the second identifier of the first terminal device is a second C-RNTI, FIG. 8 shows a specific example of a multi-path configuration method according to an embodiment of this application. The example includes the following steps.

Step S801: The remote UE may communicate with the gNB through an indirect path. Alternatively, the remote UE may communicate with the gNB through relay UE.

In this embodiment of this application, on the indirect path, the gNB may configure one special cell (special cell, SpCell) and one or more SCells for the relay UE. For a definition of the SpCell in this embodiment of this application, refer to an existing standard. Details are not described herein again. Step S801 may include: The relay UE may send an identifier of an accessed SpCell to the remote UE. Correspondingly, the remote UE may receive, from the relay UE, the identifier of the SpCell accessed by the relay UE, and use the SpCell as a cell accessed by the remote UE through the indirect path, that is, the first cell.

Step S801 may further include: The relay UE may forward, to the remote UE, the first C-RNTI configured by the gNB. Correspondingly, the remote UE may receive the first C-RNTI from the relay UE.

Step S802: The gNB may send an RRC reconfiguration message to the remote UE through the indirect path. The RRC reconfiguration message indicates the remote UE to establish a direct path. Correspondingly, the remote UE may receive the RRC reconfiguration message from the gNB through the indirect path.

Optionally, a trigger condition of step S802 may be: The gNB determines, based on a measurement report result of the remote UE, to configure a plurality of paths for the remote UE.

Optionally, the RRC reconfiguration message may include a synchronization reconfiguration parameter, and the synchronization reconfiguration parameter may include the second C-RNTI and an identifier of a second cell. For how the remote UE stores the second C-RNTI after receiving the second C-RNTI, refer to the solution 1, the solution 2, and the solution 3 in step S701. Details are not described herein again.

Optionally, the RRC reconfiguration message may further include a random access channel (random access channel, RACH) dedicated configuration (config dedicated). The random access channel dedicated configuration may be used by the remote UE to randomly access the gNB in the following step S804. The random access channel dedicated configuration may include a time domain resource and/or a frequency domain resource that are/is in the second cell and that are/is used by the UE to randomly access the gNB, information indicating that contention-based or non-contention-based random access is supported, and information indicating that two-step or four-step random access is supported.

After step S802, the following step may be performed: The remote UE creates a Uu MAC entity for the direct path. Alternatively, this step may be performed before step S801. This is not limited in this embodiment of this application.

After the Uu MAC entity is created, the following step may be further performed: The remote UE maintains the Uu MAC entity.

Step S803: The remote UE may send an RRC reconfiguration complete message to the gNB. Correspondingly, the gNB may receive the RRC reconfiguration complete message from the remote UE.

FIG. 8 schematically shows that step S803 is performed on the indirect path.

Step S804: The remote UE initiates a random access procedure, that is, the remote UE establishes the direct path in the second cell by using the RRC reconfiguration message.

In this embodiment of this application, the remote UE may randomly access the gNB on the time domain resource and/or the frequency domain resource of the second cell; or the remote UE may randomly access the gNB on a time domain resource and/or a frequency domain resource included in the RRC reconfiguration message; or the remote UE may randomly access the gNB based on a system message. This is not limited in this embodiment of this application.

In this embodiment of this application, step S803 may be performed before step S804, or step S804 may be performed before step S803, or step S803 and step S804 may be simultaneously performed. This is not limited in this embodiment of this application. Before the remote UE successfully randomly accesses the gNB, that is, before the direct path is established, step S803 may be performed on the indirect path. After the remote UE successfully randomly accesses the gNB, that is, after the direct path is established, step S803 may be performed on the indirect path and/or the direct path.

After the direct path is established, the second cell may be considered as an SpCell accessed by the remote UE through the direct path. In addition, the gNB may further configure one or more SCells for the remote UE on the direct path, and the one or more SCells and the second cell form a serving cell set of the remote UE on the direct path.

After the direct path is established, the second C-RNTI may be used by the gNB to allocate, to the remote UE, a time domain resource and/or a frequency domain resource for data transmission. In other words, the gNB may use the second C-RNTI when scheduling, through the direct path, the time domain resource and/or the frequency domain resource for data transmission.

Before the direct path is established, including during a configuration period of the direct path, the remote UE may maintain data transmission with the gNB through the indirect path. After the direct path is established, the remote UE may perform data transmission with the gNB through the direct path and/or the indirect path.

For example, with reference to FIG. 5B, the first terminal device is remote UE, the second terminal device is relay UE, the network device is a gNB, the first message is an RRC reconfiguration message, the first identifier of the first terminal device is a first C-RNTI, and the second identifier of the first terminal device is a second C-RNTI, FIG. 9 shows another specific example of a multi-path configuration method according to an embodiment of this application. The example includes the following steps.

Step S901: The remote UE may communicate with the gNB through a direct path. Alternatively, the remote UE may directly communicate with the gNB.

In this embodiment of this application, on the direct path, the gNB may configure a first cell and one or more SCells for the remote UE. The first cell is an SpCell of the remote UE on the direct path. Step S901 may include: The gNB may send an identifier of the first cell and the first C-RNTI to the remote UE. Correspondingly, the remote UE receives the identifier of the first cell and the first C-RNTI from the gNB.

Because a Uu MAC entity has been established when the direct path is established, the remote UE may maintain the Uu MAC entity.

Step S902: The gNB may send an RRC reconfiguration message to the relay UE. Correspondingly, the relay UE may receive the RRC reconfiguration message from the gNB.

Step S903: The relay UE may send an RRC reconfiguration complete message to the gNB. Correspondingly, the gNB may receive the RRC reconfiguration complete message from the relay UE.

After step S902 and step S903, the gNB may establish an RRC connection to the relay UE, to subsequently forward downlink data to the remote UE or assist the remote UE in sending uplink data to the gNB.

Step S904: The gNB may send an RRC reconfiguration message to the remote UE through the direct path. The RRC reconfiguration message indicates the remote UE to establish an indirect path. Correspondingly, the remote UE may receive the RRC reconfiguration message from the gNB through the direct path.

Optionally, a trigger condition of step S904 may be: The gNB selects appropriate relay UE for the remote UE based on a measurement report result of the remote UE.

In a possible implementation, the RRC reconfiguration message may include a synchronization reconfiguration parameter, and the synchronization reconfiguration parameter may include the second C-RNTI and an identifier of a second cell. For how the remote UE stores the second C-RNTI after receiving the second C-RNTI, refer to the solution 1, the solution 2, and the solution 3 in step S701. Details are not described herein again.

In another possible implementation, the RRC reconfiguration message may include a synchronization reconfiguration parameter, and the synchronization reconfiguration parameter may include an identifier of a second cell and an identifier of the relay UE, but does not include the second C-RNTI. For related descriptions of this implementation, refer to the solution 4 in step S702. Details are not described herein again.

Step S905: The remote UE establishes an SL connection to the relay UE.

Step S902 and step S903 may be performed before step S904 and step S905, or may be performed after step S904 and step S905. This is not limited in this embodiment of this application.

Step S906: The remote UE sends an RRC reconfiguration complete message to the gNB. Correspondingly, the gNB receives the RRC reconfiguration complete message from the remote UE.

Before the indirect path is established, including a configuration period of the indirect path, the remote UE may maintain data transmission with the gNB through the direct path. After the indirect path is established, the remote UE may perform data transmission with the gNB through the direct path and/or the indirect path.

In this embodiment of this application, step S905 may be performed before step S906, or step S906 may be performed before step S905, or step S905 and step S906 may be simultaneously performed. This is not limited in this embodiment of this application. Before the indirect path is established, step S906 may be performed on the direct path. After the indirect path is established, step S906 may be performed on the indirect path and/or the direct path.

Optionally, after the first terminal device establishes the second path, the multi-path configuration method provided in this embodiment of this application further includes: The first terminal device determines a primary cell accessed by the first terminal device, where the primary cell is a special cell on a target path. In this solution, the determined primary cell may be used by the first terminal device to uniquely determine the identifier that is of the first terminal device and that is in the primary cell, and perform RRC reestablishment or cell handover by using the identifier.

With reference to the embodiment shown in FIG. 8, after the direct path is established, the remote UE may simultaneously access the first cell through the indirect path and the second cell through the direct path. On the direct path, the gNB may configure, for the remote UE, a serving cell set including the second cell. The first terminal device determines the primary cell accessed by the first terminal device, that is, the remote UE selects one cell from the first cell and the serving cell set including the second cell as the primary cell accessed by the remote UE.

With reference to the embodiment shown in FIG. 9, on the direct path, the gNB may configure, for the remote UE, a serving cell set including the first cell. After the indirect path is established, the remote UE may simultaneously access the serving cell set including the first cell through the direct path and the second cell through the indirect path. The first terminal device determines the primary cell accessed by the first terminal device, that is, the remote UE selects one cell from the second cell and the serving cell set including the first cell as the primary cell accessed by the remote UE.

Optionally, the target path is a first path, the target path is a direct path in a first path and a second path, the target path is an indirect path in a first path and a second path, or the target path is a path randomly selected by the first terminal device from a first path and a second path.

Optionally, when the network device does not configure a split (split) SRB for an SRB, the target path is a path on which the SRB is located.

For example, the SRB in this embodiment of this application may be an SRB 1. To improve reliability of multi-path transmission, the network device may configure a split SRB 1 and a duplication SRB 1 for the SRB 1.

Optionally, when the network device configures a split SRB and a duplication (duplication) SRB for an SRB, the target path is the first path, the target path is the direct path in the first path and the second path, the target path is the indirect path in the first path and the second path, or the target path is a path randomly selected by the first terminal device from the first path and the second path.

Optionally, when the network device configures a split SRB but does not configure a duplication SRB for an SRB, the target path is a path on which a primary (primary) RLC entity is located.

For example, with reference to FIG. 8 or FIG. 9, FIG. 10 shows another specific example of a multi-path configuration method according to an embodiment of this application. The example is used by remote UE to perform RRC reestablishment, and includes the following steps.

Step S1001: The remote UE sends an RRC reestablishment request (RRCReestablishmentRequest) to a target (target) gNB by using a source gNB. Correspondingly, the target gNB receives the RRC reestablishment request from the remote UE by using the source gNB.

In this embodiment of this application, for a trigger condition of step S1001, refer to a trigger condition of RRC connection reestablishment in a conventional technology. Details are not described herein.

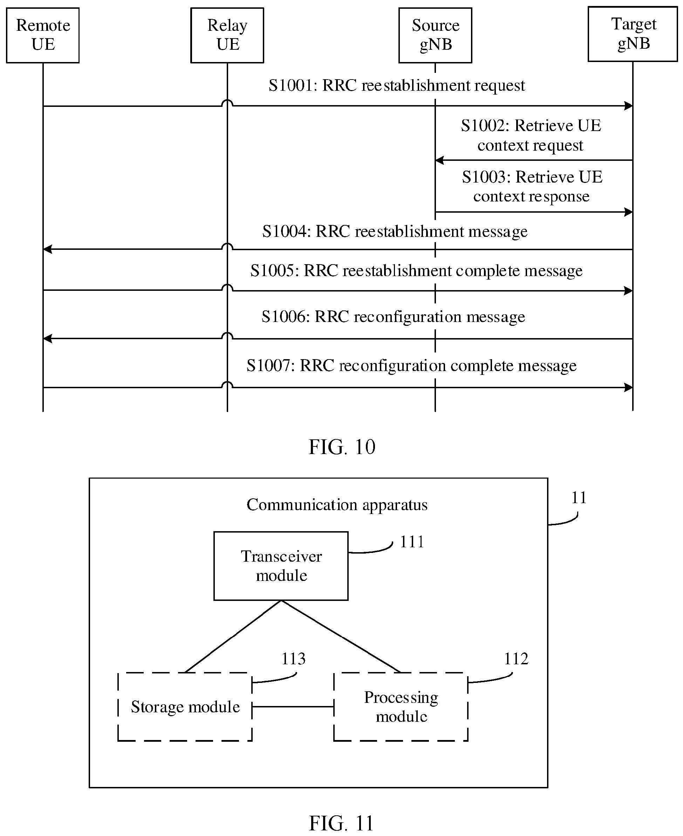

The source gNB in the embodiment shown in FIG. 10 may be the gNB in FIG. 8 or FIG. 9.

In this embodiment of this application, the RRC reestablishment request may include a primary cell accessed by the remote UE and a C-RNTI that is of the remote UE and that is in the primary cell. For a solution of determining the primary cell accessed by the remote UE, refer to the foregoing embodiment. Details are not described herein again.

Optionally, when a target path is a first path, the primary cell accessed by the remote UE is a first cell; or when a target path is a second path, the primary cell accessed by the remote UE is a second cell.

Step S1002: The target gNB sends a retrieve UE context request (retrieve UE context request) to the source gNB, where the retrieve UE context request includes the C-RNTI that is of the remote UE and that is in the primary cell accessed by the remote UE. Correspondingly, the source gNB receives the retrieve UE context request from the target gNB.

Optionally, the source gNB and the target gNB in this embodiment of this application may be a same gNB or different gNBs. When the source gNB and the target gNB are a same gNB, the source gNB may locally obtain a context of the remote UE, and does not need to perform interaction between step S1002 and the following step S1003.

Optionally, when the remote UE stores a first C-RNTI and a second C-RNTI, and the remote UE randomly selects a path from the first path and the second path as the target path, after step S1002 is performed and before step S1003 is performed, the source gNB may perform integrity verification by using two pieces of short MAC-I. If verification performed by the source gNB by using at least one piece of short MAC-I succeeds, the following steps continue to be performed.

Step S1003: The source gNB sends a retrieve UE context response (retrieve UE context response) to the target gNB, where the retrieve UE context request includes the context of the remote UE. Correspondingly, the target gNB receives the retrieve UE context response from the source gNB.

Step S1004: The target gNB sends an RRC reestablishment (RRCReestablishment) message to the remote UE by using the source gNB. Correspondingly, the remote UE receives the RRC reestablishment message from the target gNB by using the source gNB.

Step S1005: The remote UE sends an RRC reestablishment complete (RRCReestablishmentComplete) message to the target gNB by using the source gNB. Correspondingly, the target gNB receives the RRC reestablishment message from the remote UE by using the source gNB.

Step S1006: The target gNB sends an RRC reconfiguration (RRCReconfigutation) message to the remote UE by using the source gNB. Correspondingly, the remote UE receives the RRC reconfiguration message from the target gNB by using the source gNB.

Step S1007: The remote UE sends an RRC reconfiguration complete (RRCReconfigutationComplete) message to the target gNB by using the source gNB. Correspondingly, the target gNB receives the RRC reconfiguration complete message from the remote UE by using the source gNB.

In this embodiment of this application, the target gNB may perform RRC reconfiguration to reestablish an SRB 2 and a DRB.

Optionally, if a trigger condition for reestablishing an RRC connection is met on the target path, the steps in the embodiment shown in FIG. 10 are performed. If the trigger condition for reestablishing the RRC connection is met on another path other than the target path, the remote UE notifies the source gNB by using an RRC message, and the source gNB resumes the RRC connection.

In addition to the RRC reestablishment procedure shown in FIG. 10, when the remote UE performs handover from the source gNB to the target gNB, if the target gNB is configured with a plurality of paths, the target gNB may send, to the remote UE, the identifier of the primary cell accessed by the remote UE. For a solution of determining the primary cell accessed by the remote UE, refer to the foregoing embodiment. Details are not described herein again.

Optionally, after the first terminal device establishes the second path, the multi-path configuration method provided in this embodiment of this application further includes: The first terminal device determines the primary path (primary path).

Optionally, the primary path is the first path, the primary path is the direct path in the first path and the second path, the primary path is the indirect path in the first path and the second path, or the primary path is a path randomly selected by the first terminal device from a first path and a second path.

Optionally, when the network device does not configure a split SRB for an SRB, the primary path is a path on which the SRB is located.

Optionally, when the network device configures a split SRB and a duplication SRB for an SRB, the primary path is the first path, the primary path is the direct path in the first path and the second path, the primary path is the indirect path in the first path and the second path, or the primary path is a path randomly selected by the first terminal device from the first path and the second path.

Optionally, when the network device configures a split SRB but does not configure a duplication SRB for an SRB, the primary path is the path on which the primary RLC entity is located.

In this embodiment of this application, for a method of determining the primary path, refer to the method of determining the target path. Details are not described herein again.

It may be understood that, in the foregoing embodiments, the methods and/or steps implemented by the first terminal device may be alternatively implemented by a component (for example, a chip or a circuit) that can be used in the first terminal device. The methods and/or steps implemented by the second terminal device may be alternatively implemented by a component (for example, a chip or a circuit) that can be used in the second terminal device. The methods and/or steps implemented by the network device may be alternatively implemented by a component (for example, a chip or a circuit) that can be used in the network device.

The foregoing mainly describes the solutions provided in embodiments of this application from a perspective of interaction between network elements. Correspondingly, an embodiment of this application further provides a communication apparatus. The communication apparatus is configured to implement the foregoing methods. The communication apparatus may be the first terminal device in the foregoing method embodiments, or an apparatus including the first terminal device, or a component that can be used in the first terminal device. Alternatively, the communication apparatus may be the second terminal device in the foregoing method embodiments, or an apparatus including the second terminal device, or a component that can be used in the second terminal device. Alternatively, the communication apparatus may be the network device in the foregoing method embodiments, or an apparatus including the foregoing network device, or a component that can be used in the network device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used.

FIG. 11 is a diagram of a structure of a communication apparatus 11. The communication apparatus 11 includes a transceiver module 111. The transceiver module 111 may also be referred to as a transceiver unit, and is configured to implement a transceiver function. For example, the transceiver module 111 may be a transceiver circuit, a transceiver machine, a transceiver, or a communication interface.

For example, the communication apparatus 11 is the first terminal device in the foregoing method embodiments.

The communication apparatus 11 further includes a processing module 112. The transceiver module 111 is configured to receive a first message from a network device through a first path, where the first message indicates the communication apparatus 11 to establish a second path between the communication apparatus 11 and the network device, and the second path is different from the first path. The transceiver module 111 is further configured to establish the second path in a second cell by using the first message. The processing module 112 is configured to maintain one media access control MAC entity, and the MAC entity is used by the communication apparatus 11 to communicate with the network device through a direct path in the first path or the second path.

In a possible implementation, the communication apparatus 11 further includes a storage module 113. The first message includes a second identifier of the communication apparatus 11, and the second identifier of the communication apparatus 11 is an identifier that is of the communication apparatus 11 and that is in the second cell to be accessed by the communication apparatus 11 through the second path. The transceiver module 111 is further configured to receive a first identifier of the communication apparatus 11 from the network device through the first path, where the first identifier of the communication apparatus 11 is an identifier that is of the communication apparatus 11 and that is in the first cell accessed by the communication apparatus 11 through the first path. The storage module 113 is configured to store the first identifier of the communication apparatus 11. The processing module 112 is further configured to update the first identifier of the communication apparatus 11 stored in the storage module 113 to the second identifier of the communication apparatus 11. Alternatively, the storage module 113 is further configured to store the second identifier of the communication apparatus 11.

In a possible implementation, the communication apparatus 11 further includes a storage module 113. The first message includes a second identifier of the communication apparatus 11 and an identifier of the second cell to be accessed by the communication apparatus 11 through the second path, and the second identifier of the communication apparatus 11 is an identifier that is of the communication apparatus 11 and that is in the second cell to be accessed by the communication apparatus 11 through the second path. The transceiver module 111 is further configured to receive a first identifier of the communication apparatus 11 from the network device through the first path, where the first identifier of the communication apparatus 11 is an identifier that is of the communication apparatus 11 and that is in the first cell accessed by the communication apparatus 11 through the first path. The storage module 113 is configured to store the first identifier of the communication apparatus 11. The processing module 112 is further configured to: if the identifier of the second cell is the same as an identifier of the first cell, update the stored first identifier of the communication apparatus 11 to the second identifier of the communication apparatus 11. The storage module 113 is further configured to: if the identifier of the second cell is different from the identifier of the first cell, store the second identifier of the communication apparatus 11.

In a possible implementation, the first path is a direct path, and the second path is an indirect path. The first message includes an identifier of a second terminal device, the first message does not include a second identifier of the communication apparatus 11, and the second identifier of the communication apparatus 11 is an identifier that is of the communication apparatus 11 and that is in the second cell to be accessed by the communication apparatus 11 through the second path. The second terminal device is a relay device between the communication apparatus 11 and the network device. That the transceiver module 111 is further configured to establish the second path in a second cell by using the first message includes: The transceiver module 111 is configured to establish an SL connection to the second terminal device by using the identifier of the second terminal device in the first message.

In a possible implementation, the processing module 112 is further configured to determine a primary cell accessed by the communication apparatus 11, where the primary cell is a special cell on a target path.

In a possible implementation, the processing module 112 is further configured to determine the primary path.

All related content of the steps in the foregoing method embodiments may be cited in function descriptions of corresponding functional modules. Details are not described herein again.

In this embodiment, the communication apparatus 11 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

When the communication apparatus 11 is the first terminal device in the foregoing method embodiments, in a simple embodiment, a person skilled in the art may figure out that the communication apparatus 11 may be in a form of communication apparatus 600 shown in FIG. 6.

For example, the processor 601 or the processor 607 in the communication apparatus 600 shown in FIG. 6 may invoke the computer-executable instructions stored in the memory 603, so that the communication apparatus 600 performs the multi-path configuration method in the foregoing method embodiments. Specifically, functions/implementation processes of the processing module 112 in FIG. 11 may be implemented by the processor 601 or 607 in the communication apparatus 600 shown in FIG. 6 by invoking the computer-executable instructions stored in the memory 603. Functions/implementation processes of the transceiver module 111 in FIG. 11 may be implemented by using the communication module connected to the communication interface 604 in FIG. 6.

Because the communication apparatus 11 provided in this embodiment may perform the foregoing multi-path configuration method, for technical effect that can be achieved by the communication apparatus 11, refer to the foregoing method embodiments. Details are not described herein again.

It should be noted that one or more of the foregoing modules or units may be implemented by using software, hardware, or a combination of software and hardware. When any one of the foregoing modules or units is implemented by using software, the software exists in a form of computer program instructions and is stored in a memory, and a processor may be configured to execute the program instructions to implement the foregoing method procedures. The processor may be built into an SoC (system-on-a-chip) or an ASIC, or may be an independent semiconductor chip. In addition to a core that is used to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and may run necessary software or may perform the foregoing method procedures without relying on software.

Optionally, an embodiment of this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the communication apparatus further includes a memory. Optionally, the chip system may include a chip, or may include a chip and another discrete component. This is not specifically limited in this embodiment of this application.

All or some of the foregoing embodiments may be implemented by software, hardware, firmware, or any combination thereof. When a software program is used to implement embodiments, all or some of embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement a plurality of functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of the claims of this application and equivalent technologies thereof.

## Claims

1. A multi-path configuration method, comprising:
receiving, by a first terminal device, a first message from a network device through a first path, wherein the first message indicates the first terminal device to establish a second path between the first terminal device and the network device, and the second path is different from the first path;
establishing, by the first terminal device, the second path in a second cell by using the first message; and
maintaining, by the first terminal device, one media access control MAC entity, wherein the MAC entity is used by the first terminal device to communicate with the network device through a direct path in the first path or the second path.

2. The method according to claim 1, wherein the first message comprises a second identifier of the first terminal device, and the second identifier of the first terminal device is an identifier that is of the first terminal device and that is in the second cell to be accessed by the first terminal device through the second path;
before the receiving, by a first terminal device, a first message from a network device through a first path, the method further comprises:
receiving, by the first terminal device, a first identifier of the first terminal device from the network device through the first path and storing the first identifier, wherein the first identifier of the first terminal device is an identifier that is of the first terminal device and that is in a first cell accessed by the first terminal device through the first path; and
after the receiving, by a first terminal device, a first message from a network device through a first path, the method further comprises:
updating, by the first terminal device, the stored first identifier of the first terminal device to the second identifier of the first terminal device; or storing, by the first terminal device, the second identifier of the first terminal device.

3. The method according to claim 1, wherein the first message comprises a second identifier of the first terminal device and an identifier of the second cell to be accessed by the first terminal device through the second path; and the second identifier of the first terminal device is an identifier that is of the first terminal device and that is in the second cell to be accessed by the first terminal device through the second path; and
before the receiving, by a first terminal device, a first message from a network device through a first path, the method further comprises:
receiving, by the first terminal device, a first identifier of the first terminal device from the network device through the first path and storing the first identifier, wherein the first identifier of the first terminal device is an identifier that is of the first terminal device and that is in a first cell accessed by the first terminal device through the first path; and
after the receiving, by a first terminal device, a first message from a network device through a first path, the method further comprises:
if the identifier of the second cell is the same as an identifier of the first cell, updating, by the first terminal device, the stored first identifier of the first terminal device to the second identifier of the first terminal device; and
if the identifier of the second cell is different from the identifier of the first cell, storing, by the first terminal device, the second identifier of the first terminal device.

4. The method according to claim 2 or 3, wherein the first path is an indirect path, and the second path is a direct path.

5. The method according to claim 1, wherein the first path is a direct path, and the second path is an indirect path; and the first message comprises an identifier of a second terminal device, the first message does not comprise a second identifier of the first terminal device, the second identifier of the first terminal device is an identifier that is of the first terminal device and that is in the second cell to be accessed by the first terminal device through the second path, and the second terminal device is a relay device between the first terminal device and the network device; and
the establishing, by the first terminal device, the second path by using the first message comprises:
establishing, by the first terminal device, a sidelink SL connection to the second terminal device by using the identifier of the second terminal device in the first message.

6. The method according to any one of claims 1 to 5, wherein after the establishing, by the first terminal device, the second path, the method further comprises:
determining, by the first terminal device, a primary cell accessed by the first terminal device, wherein the primary cell is a special cell on a target path.

7. The method according to claim 6, wherein
the target path is the first path;
the target path is the direct path in the first path and the second path;
the target path is the indirect path in the first path and the second path; or
the target path is a path randomly selected by the first terminal device from the first path and the second path.

8. The method according to claim 6, wherein when the network device does not configure a split SRB for a signaling radio bearer SRB, the target path is a path on which the SRB is located.

9. The method according to claim 6, wherein when the network device configures a split SRB and a duplication SRB for an SRB,
the target path is the first path;
the target path is the direct path in the first path and the second path;
the target path is the indirect path in the first path and the second path; or
the target path is a path randomly selected by the first terminal device from the first path and the second path.

10. The method according to claim 6, wherein when the network device configures a split SRB but does not configure a duplication SRB for an SRB, the target path is a path on which a primary radio link control RLC entity is located.

11. The method according to any one of claims 6 to 10, wherein
when the target path is the first path, the primary cell is the first cell; and when the target path is the second path, the primary cell is the second cell.

12. The method according to any one of claims 1 to 11, wherein after the establishing, by the first terminal device, the second path, the method further comprises:
determining, by the first terminal device, a primary path.

13. The method according to claim 12, wherein
the primary path is the first path;
the primary path is the direct path in the first path and the second path;
the primary path is the indirect path in the first path and the second path; or
the primary path is a path randomly selected by the first terminal device from the first path and the second path.

14. The method according to claim 12, wherein when the network device does not configure a split SRB for an SRB, the primary path is a path on which the SRB is located.

15. The method according to claim 12, wherein when the network device configures a split SRB and a duplication SRB for an SRB,
the primary path is the first path;
the primary path is the direct path in the first path and the second path;
the primary path is the indirect path in the first path and the second path; or
the primary path is a path randomly selected by the first terminal device from the first path and the second path.

16. The method according to claim 12, wherein when the network device configures a split SRB but does not configure a duplication SRB for an SRB, the primary path is the path on which the primary RLC entity is located.

17. A first terminal device, wherein the first terminal device comprises a transceiver module and a processing module;
the transceiver module is configured to receive a first message from a network device through a first path, wherein the first message indicates the first terminal device to establish a second path between the first terminal device and the network device, and the second path is different from the first path;
the transceiver module is further configured to establish the second path in a second cell by using the first message; and
the processing module is configured to maintain one media access control MAC entity, wherein the MAC entity is used by the first terminal device to communicate with the network device through a direct path in the first path or the second path.

18. The first terminal device according to claim 17, wherein the first terminal device further comprises a storage module; and the first message comprises a second identifier of the first terminal device, and the second identifier of the first terminal device is an identifier that is of the first terminal device and that is in the second cell to be accessed by the first terminal device through the second path;
the transceiver module is further configured to receive a first identifier of the first terminal device from the network device through the first path, wherein the first identifier of the first terminal device is an identifier that is of the first terminal device and that is in a first cell accessed by the first terminal device through the first path;
the storage module is configured to store the first identifier of the first terminal device; and
the processing module is further configured to update, to the second identifier of the first terminal device, the first identifier that is of the first terminal device and that is stored in the storage module; or the storage module is further configured to store the second identifier of the first terminal device.

19. The first terminal device according to claim 17, wherein the first terminal device further comprises a storage module; the first message comprises a second identifier of the first terminal device and an identifier of the second cell to be accessed by the first terminal device through the second path; and the second identifier of the first terminal device is an identifier that is of the first terminal device and that is in the second cell to be accessed by the first terminal device through the second path;
the transceiver module is further configured to receive a first identifier of the first terminal device from the network device through the first path, wherein the first identifier of the first terminal device is an identifier that is of the first terminal device and that is in a first cell accessed by the first terminal device through the first path;
the storage module is configured to store the first identifier of the first terminal device;
the processing module is further configured to: if the identifier of the second cell is the same as an identifier of the first cell, update the stored first identifier of the first terminal device to the second identifier of the first terminal device; and
the storage module is further configured to: if the identifier of the second cell is different from the identifier of the first cell, store the second identifier of the first terminal device.

20. The first terminal device according to claim 18 or 19, wherein the first path is an indirect path, and the second path is a direct path.

21. The first terminal device according to claim 17, wherein the first path is a direct path, and the second path is an indirect path; and the first message comprises an identifier of a second terminal device, the first message does not comprise a second identifier of the first terminal device, the second identifier of the first terminal device is an identifier that is of the first terminal device and that is in the second cell to be accessed by the first terminal device through the second path, and the second terminal device is a relay device between the first terminal device and the network device; and
that the transceiver module is further configured to establish the second path in a second cell by using the first message comprises:
establishing a sidelink SL connection to the second terminal device by using the identifier of the second terminal device in the first message.

22. The first terminal device according to any one of claims 17 to 21, wherein the processing module is further configured to determine a primary cell accessed by the first terminal device, wherein the primary cell is a special cell on a target path.

23. The first terminal device according to claim 22, wherein the target path is the first path, the target path is the direct path in the first path and the second path, the target path is the indirect path in the first path and the second path, or the target path is a path randomly selected by the first terminal device from the first path and the second path.

24. The first terminal device according to claim 22, wherein when the network device does not configure a split SRB for a signaling radio bearer SRB, the target path is a path on which the SRB is located.

25. The first terminal device according to claim 22, wherein when the network device configures a split SRB and a duplication SRB for an SRB, the target path is the first path, the target path is the direct path in the first path and the second path, the target path is the indirect path in the first path and the second path, or the target path is a path randomly selected by the first terminal device from the first path and the second path.

26. The first terminal device according to claim 22, wherein when the network device configures a split SRB but does not configure a duplication SRB for an SRB, the target path is a path on which a primary radio link control RLC entity is located.

27. The first terminal device according to any one of claims 22 to 26, wherein when the target path is the first path, the primary cell is the first cell; and when the target path is the second path, the primary cell is the second cell.

28. A communication apparatus, comprising a memory and a processor coupled to the memory, wherein the memory is configured to store a program, and the processor is configured to execute the program stored in the memory; and when the communication apparatus runs, the processor runs the program, to enable the communication apparatus to perform the multi-path configuration method according to any one of claims 1 to 16.

29. A communication system, wherein the communication system comprises a network device, a second terminal device, and a first terminal device configured to perform the method according to any one of claims 1 to 16, and the second terminal device is a relay device between the first terminal device and the network device.

30. A computer-readable storage medium, wherein the computer-readable storage medium stores a computer program or instructions, and when the computer program or the instructions are run, the multi-path configuration method according to any one of claims 1 to 16 is implemented.
